# EUROPÄISCHE PATENTSCHRIFT

(11) **EP 3 500 779 B1**
(45) Veröffentlichungstag und Bekanntmachung des Hinweises auf die Patenterteilung: **13.05.2020**
(21) Anmeldenummer: 17745130.9
(22) Anmeldetag: 10.07.2017
(51) Int. Cl.: F16H 61/00, F16H 61/688

(54) **VERFAHREN ZUM BETÄTIGEN EINES HYDRAULIKSYSTEMS EINES GETRIEBES MIT EINER VERSTELLBAREN HYDRAULIKPUMPE**
METHOD FOR ACTUATING A HYDRAULIC SYSTEM OF A TRANSMISSION HAVING A VARIABLE DISPLACEMENT HYDRAULIC PUMP
PROCÉDÉ PERMETTANT D'ACTIONNER UN SYSTÈME HYDRAULIQUE D'UNE TRANSMISSION COMPRENANT UNE POMPE HYDRAULIQUE RÉGLABLE

(30) Priorität: 16.08.2016 DE 102016215228
(43) Veröffentlichungstag der Anmeldung: 26.06.2019
(73) Patentinhaber: ZF Friedrichshafen AG, 88046 Friedrichshafen (DE)
(72) Erfinder: TERWART, Markus, 97711 Thundorf (DE); NOVAK, Rainer, 6900 Bregenz (AT); RIEVER, Frank, 97769 Bad Brückenau (DE); HOFFMANN, Alexander, 66822 Lebach (DE)
(74) Vertreter: ZF Friedrichshafen AG
(86) Internationale Anmeldenummer: PCT/EP2017/067220
(87) Internationale Veröffentlichungsnummer: WO 2018/033301

(56) Entgegenhaltungen:
- WO-A2-2015/003960
- DE-A1- 19 643 305
- DE-A1-102004 008 611
- DE-A1-102014 226 548
- US-A1- 2010 312 441

## Beschreibung

Die Erfindung betrifft ein Verfahren zum Betätigen eines Hydrauliksystems eines Getriebes mit einer verstellbaren Hydraulikpumpe gemäß der im Oberbegriff des Patentanspruches 1 näher definierten Art (siehe beispielsweise DE 10 2014 226 548 A).

Aus der Praxis bekannte Automatgetriebe, wie Doppelkupplungsgetriebe, sind üblicherweise mit einer hydraulischen Getriebeansteuerung ausgeführt, womit sowohl für die Getriebebetätigung, d. h. einer Betätigung von Kupplungen, der Schaltaktuatorik und dergleichen, als auch für die Kühlung verschiedener Bauteile, wie eines Doppelkupplungssystems, Verzahnungen, Lagern und dergleichen, im Betrieb permanent Hydraulikfluidvolumen zur Verfügung zu stellen ist. Der sich jeweils aktuell einstellende Volumenstrombedarf variiert im Betrieb eines solchen Getriebes erheblich, da der aktuell beispielsweise für die Kühlung eines Doppelkupplungssystems und einer Allradkupplung sowie der für die Betätigung von Schaltaktuatoren zusätzlich zu einer aktuellen Leckage der hydraulischen Getriebeansteuerung insgesamt zur Verfügung zu stellende Hydraulikfluidvolumenstrom betriebszustandsabhängig in nicht unerheblichem Umfang schwankt.

Um die Getriebe jeweils in gewünschtem Umfang betreiben zu können, sollte der von einer Hydraulikpumpe zur Verfügung gestellte Hydraulikfluidvolumenstrom jederzeit größer als der aktuelle Hydraulikfluidvolumenstrombedarf eines Getriebes sein. Dabei stellt der Hydraulikfluidvolumenstrombedarf eines Getriebes den betriebszustandsabhängig minimal von der Hydraulikpumpe zur Verfügung zu stellenden Hydraulikfluidvolumenstrom dar, der für die Getriebebetätigung aktuell benötigt wird. Eine dadurch entstehende Unterversorgung weiterer getriebeseitiger Anforderungen, wie z. B. die Kühlung des Getriebes, wird während ungünstiger Betriebszustandsverläufe eines Getriebes zumindest temporär toleriert. Um im Hydrauliksystem den jeweils angeforderten Arbeitsdruck bzw. Systemdruck einstellen zu können, sind die Hydrauliksysteme von Getrieben üblicherweise mit einem sogenannten Systemdruckventil ausgebildet, das über einen elektrohydraulischen Drucksteller in gewünschtem Umfang vorsteuerbar ausgebildet ist.

Der von der Aktuatorik jeweils angeforderte Volumenstrombedarf hängt stark von den aktuell vorliegenden hydraulischen und mechanischen Randbedingungen ab. Diese Randbedingungen werden wiederum maßgeblich durch aktuell vorliegende Fahrerwunschvorgaben und den sich jeweils daraus ergebenden Fahrsituationen beeinflusst. Dabei variiert der Volumenstrombedarf während eines Rennstart-Fahrbetriebes oder während eines Stop-and-Go-Fahrbetriebes in erheblichem Umfang. Bekannterweise sind Getriebe, wie Doppelkupplungsgetriebe, über ihrer gesamten Lebensdauer zu einem höheren Anteil an der Darstellung von Fahrbetriebszuständen von Fahrzeugen beteiligt, während denen lediglich niedrige Lasten zu übertragen sind und während denen der Volumenstrombedarf jeweils gering ist.

Bei als Konstantpumpen ausgeführten Hydraulikpumpen von Getrieben, die über die Getriebeeingangswelle bzw. eine Ausgangswelle einer Antriebsmaschine eines Fahrzeugantriebstrangs angetrieben werden, ist der von der Hydraulikpumpe zur Verfügung gestellte Fördervolumenstrom proportional zur Antriebsdrehzahl. Dabei sind die als Konstantpumpen ausgeführten Hydraulikpumpen bezüglich ihres Fördervolumenstroms so ausgelegt, dass diese bereits ab einer vergleichbar geringen Pumpendrehzahl den zur Erreichung der maximalen Performance ausreichenden Fördervolumenstrom zur Verfügung stellen.

Dies führt jedoch nachteilhafterweise dazu, dass über eine als Konstantpumpe ausgeführte Hydraulikpumpe über einen großen Betriebsbereich eines Getriebes erheblich mehr Fördervolumenstrom als der jeweils aktuell angeforderte Bedarf zur Verfügung gestellt wird. Der von einer Hydraulikpumpe jeweils zur Verfügung gestellte hohe Fördervolumenstrom verursacht vergleichsweise hohe hydraulische Verlustleistungen, die einen energieoptimalen Betrieb von Fahrzeugen beeinträchtigen. Zusätzlich ist auch das Hydrauliksystem insgesamt an die jeweils von einer als Konstantpumpe ausgeführten Hydraulikpumpe zur Verfügung gestellten Fördervolumenströme durch entsprechenden konstruktiven Aufwand anzupassen. So sind beispielsweise Sicherheitsventile vorzusehen, um im Bereich des Hydrauliksystems bei hohen Fördervolumenströmen einer Hydraulikpumpe unzulässig hohe Betriebsdrücke zu vermeiden, und darüber hinaus entsprechend große Kanalquerschnitte vorzusehen, die wiederum einen Bauraumbedarf des Hydrauliksystems in unerwünschtem Umfang erhöhen.

Um definierte Verbrauchsziele von Antriebsmaschinen im angeforderten Umfang umsetzen zu können, werden zunehmend als regelbare Verstellpumpen ausgeführte verstellbare Hydraulikpumpen eingesetzt, die mit einer entsprechend intelligenten, softwareseitigen Ansteuerungsfunktion ausgeführt sind und deren Verdrängungsvolumen zwischen einem minimalen und einem maximalen Wert variierbar ist. Derartige Hydraulikpumpen werden beispielsweise über einen elektromagnetischen Drucksteller angesteuert und weisen im Gesamtverbund prinzipbedingt Fertigungstoleranzen auf. Das Gesamtkonstrukt aus Hydraulikpumpe und dem jeweils zugeordneten elektromagnetischen Drucksteller ist durch eine definierte Strom- /Volumenstrom-Zuordnung gekennzeichnet, die auch als Pumpenkennlinie bezeichnet wird.

Damit eine solche Verstellpumpe mit der angeforderten Genauigkeit ansteuerbar ist, muss die der Ansteuerung zugrunde liegende Pumpenkennlinie bekannt sein. Weil Pumpenkennlinien aufgrund der Toleranzen im Bereich des elektrohydraulischen Druckstellers sowie geometrischer und mechanischer Toleranzen erheblich variieren, sind die Pumpenkennlinien für jedes Hydrauliksystem separat an einem speziellen Abgleichprüfstand am Bandende einer Fertigung zu ermitteln. Die dann vorliegenden exemplarspezifischen Daten werden in einem sogenannten Bin-File abgespeichert und im Gesamtfahrzeug passend zum verbauten Getriebe auf ein Steuergerät geflasht. Die sogenannten Bin-File-Daten werden einer elektronischen Getriebesteuerung zur Verfügung gestellt, wobei die Güte dieser Bin-File-Daten die essentielle Grundlage für eine reproduzierbare und energieeffiziente Ansteuerung der Getriebeaktuierung und der Getriebekühlung darstellt.

Problematisch dabei ist jedoch, dass nach einem Austausch des elektronischen Getriebesteuergeräts oder der Hydraulik nicht mehr die am Abgleichprüfstand ermittelten exemplarspezifischen Daten der Pumpenkennlinie bzw. keine passenden Bin-File-Daten mehr vorliegen. Werden lediglich sogenannte Default-Werte bzw. Standardwerte für den weiteren Betrieb eines Getriebes bzw. eines Doppelkupplungsgetriebes verwendet, dessen elektrohydraulisches Getriebesteuersystem zumindest teilweise ersetzt wurde, treten im Betrieb mannigfaltige Probleme auf. Die Probleme reichen über Komforteinbußen im Fahrereindruck und sogenannte Gangblocker bis hin zu verbrannten Kupplungen oder Lager- sowie Zahnradschäden, die durch unzureichende Kühlung verursacht werden und zu Getriebeausfällen sowie Reklamationen führen.

Eine nach einer erfolgten Reparatur eines Getriebes erneute Ermittlung der Pumpenkennlinie ist während eines Werkstattbesuchs nicht in adäquatem Umfang möglich, da Reparaturwerkstätten aus Kostengründen üblicherweise nicht die dazu nötige Sensorik, d. h. Volumenstromsensoren, Systemdrucksensoren und dergleichen, zur Verfügung stehen.

Zusätzlich verändert sich das Betriebsverhalten einer Hydraulikpumpe über der Lebensdauer eines Getriebes, die bei zu hohen Abweichungen eine Anpassung der zu Beginn des Lebenszyklus eines Getriebes festgelegten Pumpenkennlinie erfordern, um komfortbeeinflussende Reaktionen, wie unerwünschte Systemdruckeinbrüche, hohe Schleppmomente aufgrund unbewusst hohem zur Verfügung gestellten Fördervolumenstrom und dergleichen, zu vermeiden. Dies ist jedoch mit den derzeit in Getrieben hinterlegten Adaptionsroutinen nicht im erforderlichen Umfang möglich.

Der vorliegenden Erfindung liegt die Aufgabe zugrunde, ein Verfahren zum Betreiben eines Hydrauliksystems eines Getriebes mit einer verstellbaren Hydraulikpumpe zur Verfügung zu stellen, mittels welchem beispielsweise nach einem Austausch einer der Komponenten eines Hydrauliksystems exemplarspezifische Daten einer verstellbaren Hydraulikpumpe mit geringem Aufwand ermittelbar und für einen späteren Betrieb eines Getriebes zur Verfügung stellbar sind.

Erfindungsgemäß wird diese Aufgabe mit einem Verfahren mit den Merkmalen des Patentanspruches 1 gelöst.

Bei dem erfindungsgemäßen Verfahren zum Betreiben eines Hydrauliksystems eines Getriebes mit einer verstellbaren Hydraulikpumpe und mit einem auf einer Förderseite der Hydraulikpumpe angeordneten vorsteuerbaren Systemdruckventil, mittels dem ein Systemdruck eines Primärdruckkreises in Abhängigkeit des Fördervolumenstroms der verstellbaren Hydraulikpumpe und der Vorsteuerung einstellbar ist, wird das Hydrauliksystem zur Ermittlung einer Pumpenkennlinie der Hydraulikpumpe zunächst in einen definierten Betriebszustandsbereich überführt, in dem der über das Systemdruckventil geführte und der von der Hydraulikpumpe am Systemdruckventil anliegende Fördervolumenstrom größer oder kleiner als ein aus dem Hydrauliksystem abfließender und definiert eingestellter Hydraulikfluidvolumenstrom ist. Das Systemdruckventil wird zur Einstellung eines definierten Druckniveaus des Systemdruckes entsprechend vorgesteuert, wobei ausgehend von diesem Betriebszustand des Hydrauliksystems jeweils der Fördervolumenstrom reduziert oder vergrößert wird und dabei der Systemdruck überwacht wird. Zum Zeitpunkt, zu dem eine Abweichung des jeweils aktuell vorliegenden Systemdrucks vom definierten Systemdruck größer oder gleich einer ersten Schwelle oder kleiner oder gleich einer zweiten Schwelle vorliegt, wird ein dem Hydraulikfluidvolumenstrom des Hydrauliksystems entsprechender Fördervolumenstrom der Hydraulikpumpe ermittelt.

Die erfindungsgemäße Vorgehensweise basiert auf der Tatsache, dass sich der Fördervolumenstrom der Hydraulikpumpe im Betrieb des Getriebes betriebszustandsabhängig in einen Kühlölvolumenstrom, in einen Leckagevolumenstrom und in einen für die Getriebebetätigung erforderlichen Hydraulikfluidvolumenstrom aufteilt. Der Volumenstrom, der nicht für die Getriebebetätigung benötigt wird und auch nicht über die Leckagen des Hydrauliksystems aus diesem abfließt, steht für die Kühlung des Getriebes zur Verfügung. Wenn die Getriebebetätigung deaktiviert ist, ist von der Hydraulikpumpe lediglich der Volumenstrom zur Aufrechterhaltung des Systemdrucks zu fördern, der über die Leckagen des Hydrauliksystems abströmt. In einem solchen Betriebszustand des Hydrauliksystems ist der Fördervolumenstrom der Hydraulikpumpe gleich der Summe der über die Leckagen des Hydrauliksystems abfließenden Leckageölvolumenströme, wenn ein aktuell einzustellender Systemdruck gerade noch nicht oder gerade nicht mehr ermittelt wird.

Dabei wird während der erfindungsgemäßen Bestimmung des Fördervolumenstromes der Hydraulikpumpe der Fördervolumenstrom der Hydraulikpumpe ausgehend von einem Betriebszustand des Hydrauliksystems, zu dem der aktuell vorliegende Systemdruck dem im Bereich des Systemdruckventils aktuell eingestellten Systemdruck entspricht, so weit reduziert, bis ein definierter Systemdruckeinbruch bei Erreichen bzw. Unterschreiten der ersten Schwelle erkannt wird. Alternativ oder zusätzlich dazu wird während der erfindungsgemäßen Bestimmung des Fördervolumenstromes der Hydraulikpumpe der Fördervolumenstrom der Hydraulikpumpe ausgehend von einem Betriebszustand des Hydrauliksystems, zu dem eine Abweichung des aktuell vorliegenden Systemdrucks von dem im Bereich des Systemdruckventils aktuell eingestellten Systemdruck größer als die zweite Schwelle ist, so weit angehoben, bis die zweite Schwelle erreicht bzw. überschritten wird.

In Abhängigkeit des jeweils vorliegenden Anwendungsfalles besteht die Möglichkeit, dass die erste Schwelle und die zweite Schwelle voneinander abweichen oder einander entsprechen.

Die erfindungsgemäße Vorgehensweise stellt eine mit geringem Aufwand in bestehende Getriebesysteme implementierbare Einlernroutine dar, die lediglich mithilfe der im Bereich eines Getriebes verbauten Sensorik auf einfache und kostengünstige Art und Weise durchführbar ist, um die aktuelle stationäre Abhängigkeit zwischen der Eingangsgröße und der zugehörigen Ausgangsgröße bzw. die Pumpenkennlinie mit hinreichender Genauigkeit nach einem Austausch einer Getriebekomponente ermitteln zu können oder die Pumpenkennlinie an ein sich über der Lebensdauer veränderndes Betriebsverhalten der Hydraulikpumpe anpassen zu können. Dabei entspricht vorliegend die Eingangsgröße dem Betätigungsstrom einer elektromagnetischen Vorsteuerstufe und die Ausgangsgröße dem sich jeweils zum eingestellten Betätigungsstrom des elektrohydraulischen Druckstellers ergebenden Fördervolumenstrom der verstellbaren Hydraulikpumpe, wenn das Hydrauliksystem einen entsprechenden konstruktiven Aufbau aufweist.

Bei einer vorteilhaften Variante des erfindungsgemäßen Verfahrens wird das Hydrauliksystem nach Ermittlung des dem Hydraulikfluidvolumenstrom entsprechenden Fördervolumenstromes wieder in den definierten Betriebszustandsbereich überführt. Daran anschließend wird der eingestellte Hydraulikfluidvolumenstrom des Hydrauliksystems gegenüber der vorgehenden Bestimmung des Fördervolumenstroms der Hydraulikpumpe verändert und wiederum anschließend daran der Fördervolumenstrom der Hydraulikpumpe wieder reduziert oder erhöht. Zum Zeitpunkt, zu dem eine Abweichung des jeweils aktuell vorliegenden Systemdrucks vom definierten Systemdruck gleich einer Schwelle vorliegt, wird erneut ein dem Hydraulikfluidvolumenstrom des Hydrauliksystems entsprechender Fördervolumenstrom der Hydraulikpumpe ermittelt, womit auf einfache Art und Weise nach und nach weitere Stützstellen der Pumpenkennlinie ermittelbar sind.

Wird der Hydraulikfluidvolumenstrom des Hydrauliksystems stufenweise verändert, ist die Pumpenkennlinie anhand mehrerer nacheinander ermittelter und zueinander beabstandeter Stützstellen innerhalb kurzer Betriebszeiten einlernbar.

Dabei besteht die Möglichkeit den Hydraulikfluidvolumenstrom des Hydrauliksystems mittels einer temporären Befüllung einer Kupplung des Doppelkupplungssystems mit definiertem Druckdelta zu verändern.

Um die Pumpenkennlinie in gewünschtem Umfang und mit geringem Aufwand einlernen zu können, wird zur Darstellung des definierten Betriebszustandes des Hydrauliksystems der Fördervolumenstrom der Hydraulikpumpe bei einer weiteren vorteilhaften Variante des erfindungsgemäßen Verfahrens jeweils auf ein definiertes Niveau eingestellt.

Wird das definierte Niveau des Fördervolumenstromes der Hydraulikpumpe jeweils in Abhängigkeit des Hydraulikfluidvolumenstromes eingestellt, ist auf einfache Art und Weise gewährleistet, dass der während der Einlernphase der Pumpenkennlinie jeweils als Startwert vorgegebene Fördervolumenstrom der Hydraulikpumpe an den jeweils aktuell vorgegebenen Hydraulikfluidvolumenstrom angepasst ist und anschließend in einem für die Ermittlung des Fördervolumenstromes erforderlichen Umfang verändert werden kann, bis der definierte Systemdruckeinbruch vorliegt.

Der Hydraulikfluidvolumenstrom wird bei einer mit geringem Aufwand durchführbaren Variante des erfindungsgemäßen Verfahrens in Abhängigkeit einer Betätigung eines oder mehrerer elektrohydraulischer Drucksteller des Hydrauliksystems variiert.

Bei einer besonders einfach durchführbaren Variante des erfindungsmäßen Verfahrens wird der Systemdruck messtechnisch über eine im Bereich eines mit dem Systemdruck beaufschlagten Aktuators angeordnete Messeinrichtung bestimmt, wobei das Druckniveau des im Bereich des Aktuators anzulegenden Betätigungsdrucks auf einen Wert eingestellt wird, der größer als der aktuell eingestellte Systemdruck ist.

Wird der im Bereich einer Kupplung des Getriebes anzulegende Betätigungsdruck über einen der Kupplung zugeordneten elektrohydraulischen Drucksteller auf einen Wert größer als der Systemdruck eingestellt, ist der aktuelle Systemdruck wiederum mit geringem Aufwand über die bereits in einem Getriebe vorhandene Sensorik auf bauraum- und kostengünstige Art und Weise bestimmbar.

Wird der Hydraulikfluidvolumenstrom mittels eines das Hydrauliksystem abbildenden Models bestimmt, ist die Pumpenkennlinie der Hydraulikpumpe ohne zusätzliche Sensorik auf kostengünstige Art und Weise einlernbar.

Der Fördervolumenstrom der Hydraulikpumpe wird bei einer mit geringem Betätigungsaufwand durchführbaren Variante des erfindungsmäßen Verfahrens in Abhängigkeit eines im Bereich eines elektrohydraulischen Druckstellers vorgebbaren Vorsteuerdrucks variiert, wobei der Vorsteuerdruck wiederum in Abhängigkeit eines am Drucksteller anlegbaren Betätigungsstroms steht.

Bei einer alternativen Variante des erfindungsgemäßen Verfahrens wird eine die Abhängigkeit des Fördervolumenstroms der Hydraulikpumpe vom im Bereich des der Hydraulikpumpe zugeordneten elektrohydraulischen Druckstellers anlegbaren Betätigungsstrom abbildende Kennlinie in Abhängigkeit des Verlaufs des Systemdrucks bestimmt, die das reale Verhalten der Hydraulikpumpe über zumindest einen Teil des gesamten Betriebsbereichs exakt abbildet.

Wird die Kennlinie ausgehend von definierten Stützstellen erstellt, wobei die Stützstellen der Kennlinie mit Stromwerten des Betätigungsstroms des der Hydraulikpumpe zugeordneten elektrohydraulischen Druckstellers korrespondieren, zu denen jeweils eine Änderung des Gradienten des Verlaufs des Systemdrucks ermittelt wird, ist auch die Bestimmung der Kennlinie innerhalb kurzer Betriebszeiten durchführbar.

Wird eine die Abhängigkeit des Fördervolumenstroms der Hydraulikpumpe vom im Bereich des der Hydraulikpumpe zugeordneten elektrohydraulischen Druckstellers anlegbaren Betätigungsstroms abbildende Default-Kennlinie bzw. Standard-Kennlinie in Abhängigkeit des Hydraulikfluidvolumenstroms angepasst, ist mittels des erfindungsgemäßen Verfahrens der stationäre Zusammenhang zwischen dem Eingangswert der Vorsteuerung und dem Ausgangswert der Hydraulikpumpe innerhalb kurzer Betriebszeiten bestimmbar.

Die Standard-Kennlinie bzw. die Default-Kennlinie wird bei einer weiteren vorteilhaften Variante des erfindungsgemäßen Verfahrens mit geringem Aufwand ausgehend von definierten Stützstellen der Standard-Kennlinie angepasst, wobei die Stützstellen der Standard-Kennlinie mit Stromwerten des Betätigungsstroms des der Hydraulikpumpe zugeordneten elektrohydraulischen Druckstellers korrespondieren.

Werden die definierten Stützstellen der Kennlinie oder der Default-Kennlinie durch rampenförmiges Anheben und anschließendes rampenförmiges Reduzieren des Betätigungsstroms des der Hydraulikpumpe zugeordneten elektrohydraulischen Druckstellers ermittelt, wobei der jeweils mit einer Stützstelle korrespondierende Stromwert dem Mittelwert der Stromwerte entspricht, die während dem rampenförmigen Anheben und dem rampenförmigen Absenken des Betätigungsstroms jeweils für eine Stützstelle bestimmt werden, werden bei den Einlernwerten auftretende Hysterese-Effekte mit geringem Aufwand bereinigt.

Um das Risiko einer Fehldetektion zu minimieren und festzustellen, ob die ermittelten Einlernwerte in Ordnung sind, werden bei einer vorteilhaften Variante des erfindungsgemäßen Verfahrens die jeweils für die Stützstellen ermittelten Stromwerte mittels vordefinierter Werte plausibilisiert. Damit steht jeweils ein entsprechender Hinweis dahingehend zur Verfügung, ob ein erneuter Einlernversuch durchzuführen ist oder die Hydraulik des Getriebes auszutauschen ist.

Sowohl die in den Patentansprüchen angegebenen Merkmale als auch die im nachfolgenden Ausführungsbeispiel des erfindungsgemäßen Gegenstands angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Gegenstandes ergeben sich aus den Patentansprüchen und dem nachfolgend unter Bezugnahme auf die Zeichnung prinzipmäßig beschriebenen Ausführungsbeispiel.

Es zeigt:
Fig. 1 eine stark schematisierte Darstellung eines Fahrzeugantriebsstrangs mit einer Antriebsmaschine, einem Abtrieb und einem zwischen der Antriebsmaschine und den Abtrieb im Kraftfluss des Fahrzeugantriebsstrangs angeordneten Getriebe; und
Fig. 2 einen Verlauf eines Fördervolumenstroms einer verstellbaren Hydraulikpumpe über einem Betätigungsstrom eines der Hydraulikpumpe zugeordneten elektrohydraulischen Druckstellers.

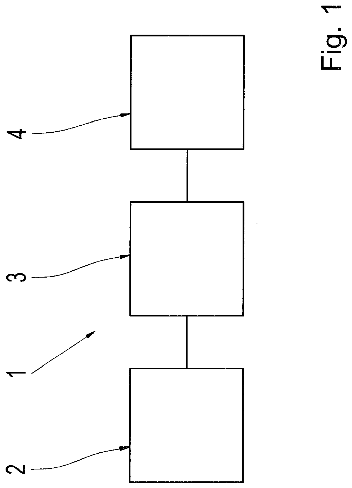

Fig. 1 zeigt eine schematisierte Darstellung eines Fahrzeugantriebsstranges 1 mit einer Antriebsmaschine 2, mit einem als Doppelkupplungsgetriebe ausgeführten Getriebe 3 und mit einem Abtrieb 4, wobei das Getriebe 3 eingangsseitig mit der Antriebsmaschine 2 und ausgangsseitig mit dem Abtrieb 4 in Wirkverbindung steht. Das Getriebe 3 ist mit einem elektrohydraulischen Getriebesteuersystem bzw. einem Hydrauliksystem ausgeführt, das eine vorliegend als aktiv verstell- und regelbare Hydraulikpumpe ausgebildete Druckmittelquelle umfasst. Die verstellbare Hydraulikpumpe ist vorliegend als verstell- und regelbare Flügelzellenpumpe ausgeführt, über die ein variierbares Fördervolumen bzw. ein variierbarer Fördervolumenstrom zur Verfügung stellbar ist, wobei auch andere geeignete Bauarten regelbarer Verstellpumpen vorgesehen werden können. Das Fördervolumen der Hydraulikpumpe ist aktiv über eine Ventileinrichtung bzw. einen elektrohydraulischen Drucksteller einstellbar, der auch als elektromagnetischer Drucksteller bezeichnet wird.

Neben der Ventileinrichtung umfasst das elektrohydraulische Getriebesteuersystem auch ein sogenanntes Systemdruckventil, in dessen Bereich ein Systemdruck in einem als Primärdruckkreis ausgeführten Druckkreis des elektrohydraulischen Getriebesteuersystems einstellbar ist, der über das Systemdruckventil mit höherer Priorität mit von der Hydraulikpumpe zur Verfügung stehendem Hydraulikfluid versorgt wird als ein ebenfalls stromab des Systemdruckventils angeordneter Sekundärdruckkreis. Sowohl über den Primärdruckkreis als auch über den Sekundärdruckkreis werden verschiedene Verbraucher des Getriebes 3 mit Hydraulikfluid versorgt, wobei über den Primärdruckkreis u. a. Schaltelemente eines Doppelkupplungssystems des Getriebes 3 mit Betätigungsdruck beaufschlagt werden, während ein Kühl- und Schmierölsystem des Getriebes 3 über den Sekundärdruckkreis des elektrohydraulischen Getriebesteuersystems versorgt wird.

Die Hydraulikpumpe wird vorliegend direkt von der Antriebsmaschine 2 über eine Eingangswelle des Getriebes 3 angetrieben, womit die Antriebsdrehzahl der Hydraulikpumpe im Wesentlichen gleich der Drehzahl der Antriebsmaschine 2 ist. In Abhängigkeit des jeweils vorliegenden Anwendungsfalles besteht auch die Möglichkeit, dass zwischen der Getriebeeingangswelle und der Hydraulikpumpe ein Getriebe mit definierter Übersetzung vorgesehen ist, über das die Drehzahl der Antriebsmaschine 2 jeweils auf ein höheres oder ein niedrigeres Drehzahlniveau transformiert wird.

Stromab des Systemdruckventiles ist ein vorsteuerbares Kühlventil des Sekundärdruckkreises vorgesehen, über das das Systemdruckventil mit Bereichen des Getriebes 3 zum Beaufschlagen dieser Bereiche mit Hydraulikfluid in Wirkverbindung bringbar ist. Die Bereiche des Getriebes 3 weisen unterschiedliche hydraulische Widerstände auf. Verteilungsfaktoren des im Bereich des Kühlventils vom Systemdruckventil anliegenden Hydraulikfluides in Richtung der Bereiche des Getriebes 3 variieren über den Betriebsbereich des Kühlventils zumindest bereichsweise.

Um die Hydraulikpumpe mit der angeforderten Genauigkeit ansteuern zu können, wird die stationäre Abhängigkeit eines Betätigungsstroms des der Hydraulikpumpe zugeordneten elektrohydraulischen Druckstellers und des jeweils damit korrespondierenden Fördervolumenstroms der Hydraulikpumpe vor der Auslieferung des Getriebes 3 an einem speziellen Komponentenprüfstand bzw. Abgleichprüfstand ermittelt. Damit sind exemplarspezifische Toleranzen im Bereich der Vorsteuerstufe bzw. des elektrohydraulischen Druckstellers sowie geometrische und mechanische Toleranzen der Hydraulikpumpe und des Hydrauliksystems abbildbar. Die am Komponentenprüfstand ermittelten Daten werden in einem sogenannten Bin-File abgespeichert und im Gesamtfahrzeug passend zum verbauten Getriebe 3 auf ein Steuergerät geflasht.

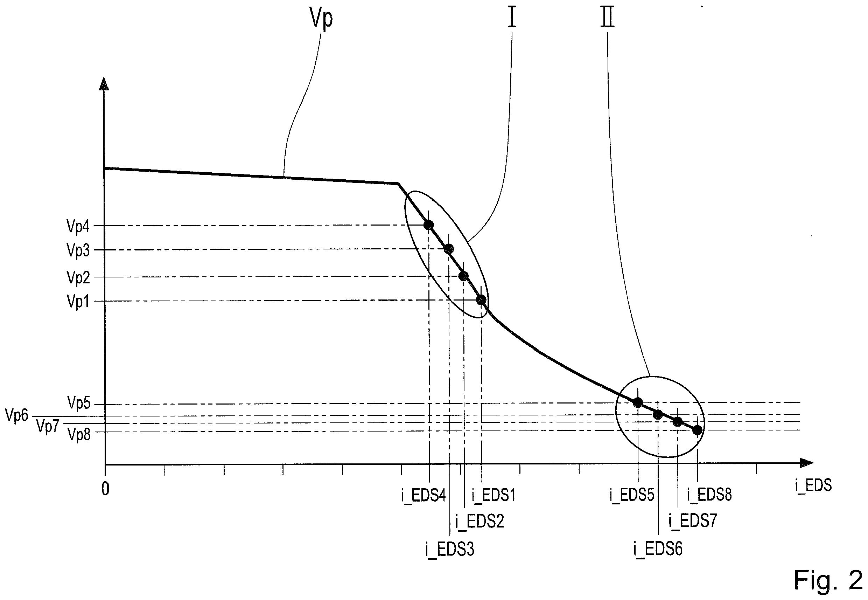

Damit das Getriebe nach einem Tausch des elektronischen Getriebesteuergeräts oder der Hydraulik des Hydrauliksystems bzw. des elektrohydraulischen Getriebesteuersystems weiterhin in gewünschtem Umfang betrieben werden kann oder ein sich über die Lebensdauer veränderndes Betriebsverhalten der Hydraulikpumpe berücksichtigen zu können, ist der in Fig. 2 dargestellte stationäre Zusammenhang zwischen dem Betätigungsstrom i_EDS des elektrohydraulischen Druckstellers und des Fördervolumenstroms Vp der Hydraulikpumpe mittels der nachfolgend näher beschriebenen Vorgehensweisen in gewünschtem Umfang für das nach der Reparatur bzw. nach dem Austausch einer der Komponenten des Hydrauliksystems vorliegende neue Getriebe oder das bereits vorliegende Getriebe auf einfache Art und Weise bestimmbar.

Hierfür wird das Systemdruckventil, das vorliegend in gleichem Umfang wie das Kühlventil über einen elektrohydraulischen Drucksteller mit Vorsteuerdruck beaufschlagbar ist, durch entsprechendes Anlegen eines Vorsteuerdrucks zunächst in einen Betriebszustand überführt, in dem im Bereich des Systemdruckventils der minimale Systemdruck eingestellt wird. Zusätzlich wird der Versorgungsvolumenstrom Vp der Druckmittelquelle bzw. der Hydraulikpumpe auf einen Wert eingestellt, zu dem am Systemdruckventil bzw. an dessen Ventilschieber Strömungskräfte wirken, die eine volumenstromproportionale Anhebung des minimalen Systemdrucks bewirken. Der einzuregelnde minimale Systemdruck wird deutlich überschritten, da sich dadurch auch ein höherer Druckabfall an den hydraulischen Widerständen stromab des Systemdruckventilschiebers einstellt. In diesem Betriebszustand befindet sich das Systemdruckventil im Endanschlag und weist das Betriebsverhalten einer Blende auf.

Der über das Systemdruckventil geführte Hydraulikfluidvolumenstrom ist gleich dem Produkt aus einer Blendenkonstante des Strömungsquerschnitts eines zwischen dem Systemdruckventil und dem bis hin zum Ölsumpf führenden Leitungsbereiches, über die konstruktive Gegebenheiten berücksichtigt werden, und der Quadratwurzel aus der Druckdifferenz zwischen dem Druck stromauf des Systemdruckventils und des Drucks stromab des Systemdruckventils. Um dieses Verhalten des Systemdruckventils zu erreichen, ist wie bereits erwähnt das Systemdruckventil derart vorzusteuern, dass im Bereich des Systemdruckventils der minimale Systemdruck eingeregelt wird, und gleichzeitig der am Systemdruckventil von der Hydraulikpumpe anliegende Hydraulikfluidvolumenstrom bzw. Fördervolumenstrom Vp und die damit korrespondierende Pumpenantriebsdrehzahl entsprechend hoch genug einzustellen, damit sich das Systemdruckventil im Endanschlag befindet.

Des Weiteren ist die Versorgung weiterer hydraulischer Verbraucher des Getriebes 3, wie Schaltkupplungen, Aktuatoren und dergleichen, abzuschalten, sodass der um die Systemleckage reduzierte Fördervolumenstrom der Hydraulikpumpe kontinuierlich durch den Sekundärkreis bzw. den Kühlölpfad des Systemdruckventils in Richtung des Kühlventils fließt, das in einem definierten Betriebszustand gehalten wird, in dem der hydraulische Widerstand stromab des Systemdruckventils im Wesentlichen konstant ist. Ausgehend von diesem Betriebszustand des Hydrauliksystems führt ein entsprechend hoher Fördervolumenstrom der Hydraulikpumpe zu einer definierten Anhebung des minimal darstellbaren Systemdrucks. Aufgrund geringer Streuung der hydraulischen Widerstände bei konstanten Bedingungen, beispielsweise bei konstanter Betriebstemperatur, bewirkt ein definierter Fördervolumenstrom einen erwarteten Druck im Sekundärdruckkreis.

Um die Pumpenkennlinie der Hydraulikpumpe einzulernen bzw. zu bestimmen, wird eine Stromrampe des Betätigungsstroms i_EDS abgefahren, mit dem der der Hydraulikpumpe zugeordnete elektrohydraulische Drucksteller beaufschlagt wird. Während dem Abfahren der Stromrampe wird der Systemdruck überwacht.

Dabei wird der Systemdruck indirekt über Drucksensoren im Bereich der Kupplungen des Doppelkupplungssystems des Getriebes 3 gemessen. Hierfür wird ein Kupplungsventil einer der Kupplungen des Doppelkupplungssystems, dessen zugeordnetes Teilgetriebe des Getriebes 3 geöffnet ist bzw. in dessen Bereich kein Gang eingelegt ist, in einen Zustand versetzt, zu dem der im Bereich der Kupplung anzulegende Betätigungsdruck jederzeit höher als der aktuell eingestellte Systemdruck ist. Da im Bereich der Kupplung bzw. im Bereich des Drucksensors der Kupplung jeweils lediglich der Systemdruck anliegt, wird über den Drucksensor der Kupplung mit geringem Aufwand der Systemdruck ermittelt.

Die Pumpenkennlinie wird anhand mehrerer definierter Stützstellen eingelernt, wobei eine Stützstelle jeweils durch einen Volumenstromwert Vp1 bis Vp4 und einen Wert i_EDS 1 bis i_EDS4 des Betätigungsstroms i_EDS des der Hydraulikpumpe zugeordneten elektrohydraulischen Druckstellers definiert ist.

Da jeder Volumenstromwert bzw. Fördervolumenstromwert Vp1 bis Vp4 unter den oben näher beschriebenen Bedingungen einem definierten Systemdruckwert entspricht, ist eine Stützstelle der Pumpenkennlinie dadurch einlernbar, dass während dem Durchfahren der Stromrampe jeweils der Stromwert des Betätigungsstroms i_EDS des der Hydraulikpumpe zugeordneten elektrohydraulischen Druckstellers abgespeichert wird, wenn ein mit einem definierten Volumenstromwert Vp1 bis Vp4 korrespondierender Druckwert des Systemdrucks erreicht wird.

Um bei der Bestimmung der Einlernwerte bzw. der Stützstellen auftretende Hysterese-Effekte bereinigen zu können, wird die Stromrampe des Betätigungsstroms i_EDS des der Hydraulikpumpe zugeordneten elektrohydraulischen Druckstellers in beide Richtung durchfahren und es wird für jede Stützstelle der Mittelwert der jeweils für eine Stützstelle ermittelten Stromwerte gebildet. Das bedeutet, dass zunächst der Betätigungsstrom i_EDS von einem definierten unteren bis zu einem definierten oberen Wert rampenförmig angehoben und jeweils dabei der Systemdruck überwacht wird. Daran anschließend wird der Betätigungsstrom i_EDS des elektrohydraulischen Druckstellers rampenförmig vom oberen Stromwert bis auf den unteren Stromwert reduziert und ebenfalls dabei der Systemdruck überwacht.

Während einer Bestimmung der Arbeitspunkte bzw. der Stützstellen der Pumpenkennlinie nachgelagerten Plausibilisierung wird entschieden, ob die ermittelten Werte plausibel bzw. in Ordnung sind oder ob das Risiko einer Fehldetektion besteht. In Abhängigkeit des Abfrageergebnisses wird ein entsprechender Hinweis ermittelt, ob ein erneuter Einlernversuch gestartet wird, oder die Hydraulik auszutauschen ist.

Die vorbeschriebene Vorgehensweise ist geeignet, einen in Fig. 2 näher gekennzeichneten Bereich I der Pumpenkennlinie einzulernen bzw. zu bestimmen, wobei der Bereich höhere Fördervolumenströme Vp1 bis Vp4 der verstellbaren Hydraulikpumpe 3 umfasst. Dies resultiert aus der Tatsache, dass der Volumenstrom Vp während der vorbeschriebenen Vorgehensweise zum Einlernen der Pumpenkennlinie ausreichend hoch einzustellen ist, um den vorbeschriebenen Effekt in auswertbarem Umfang zu erzeugen.

Des Weiteren ist diese Vorgehensweise dazu geeignet, die Pumpenkennlinie bei höheren Fördervolumenströmen Vp1 bis Vp4 der verstellbaren Hydraulikpumpe im Kundendienstfall, beispielsweise nach einem Austausch des hydraulischen Steuergeräts oder des elektrischen Getriebesteuergeräts, exemplarspezifisch einzulernen. Zusätzlich besteht auch die Möglichkeit, über die vorbeschriebene Vorgehensweise die Pumpenkennlinie im Fahrbetrieb eines Fahrzeugs während geeigneter Fahrsituationen, wie einer Konstantfahrt, in Form einer Adaptionsroutine den Lebensdauereffekten nachzuführen und entsprechend anzupassen.

Um einen in Fig. 2 näher gekennzeichneten Bereich II der Pumpenkennlinie, d. h. für kleinere Fördervolumenströme Vp5 bis Vp8 der Hydraulikpumpe, einlernen zu können, wird die nachfolgend näher beschriebene weitere Vorgehensweise vorgeschlagen.

Die weitere Vorgehensweise baut auf der Tatsache auf, dass sich der Fördervolumenstrom Vp der Hydraulikpumpe im Betrieb des Getriebes 3 betriebszustandsabhängig in einen Kühlölvolumenstrom, in einen Leckagevolumenstrom und in einen für die Getriebebetätigung erforderlichen Hydraulikfluidvolumenstrom aufteilt. Der Volumenstrom, der nicht für die Getriebebetätigung benötigt wird und auch nicht über die Leckagen des Hydrauliksystems aus diesem abfließt, steht für die Kühlung des Getriebes 3 zur Verfügung. Wenn die Getriebebetätigung deaktiviert ist, ist von der Hydraulikpumpe lediglich der Volumenstrom zur Aufrechterhaltung des Systemdrucks zu fördern, der über die Leckagen des Hydrauliksystems abströmt. In einem solchen Betriebszustand des Hydrauliksystems ist der Fördervolumenstrom Vp der Hydraulikpumpe gleich der Summe der über die Leckagen des Hydrauliksystems abfließenden Leckageölvolumenströme, wenn ein definierter Systemdruckeinbruch ermittelt wird.

Die über die Leckagen des Hydrauliksystems abfließenden Leckageölvolumenströme sind über eine Simulation auf einfache Art und Weise bestimmbar und durch gezieltes Betätigen von elektrohydraulischen Druckstellern des Hydrauliksystems in definiertem Umfang einstellbar und beeinflussbar. Somit sind wiederum mehrere Volumenstromstützstellen definierbar, die auf einfache Art und Weise ermittelbar sind.

Zur Bestimmung des Bereichs II der Pumpenkennlinie der Hydraulikpumpe wird der gesamte aus dem Hydrauliksystem abfließende Leckageölvolumenstrom durch eine definierte Betätigung der nicht an der Regelung der Hydraulikpumpe und des Systemdrucks beteiligten elektrohydraulischen Druckstellers entsprechend gewählt eingestellt. Zusätzlich wird der Systemdruck auf einen definierten Druckwert eingestellt. Daran anschließend wird eine Stromrampe des der Hydraulikpumpe zugeordneten elektrohydraulischen Druckstellers durchfahren und dadurch der von der Hydraulikpumpe zur Verfügung gestellte Fördervolumenstrom Vp von einem oberen in Richtung eines unteren Fördervolumenstromwerts reduziert und zusätzlich dabei der Systemdruck messtechnisch in vorbeschriebenem Umfang im Bereich des Drucksensors einer der Kupplungen des Doppelkupplungssystems des Getriebes 3 überwacht.

Sobald ein definierter Systemdruckeinbruch ausgehend vom definierten Druckwert des Systemdrucks ermittelt wird, wird ein Fördervolumenstrom Vp5 der Hydraulikpumpe erkannt, der gleich der Summe der zuvor definiert eingestellten Leckageölvolumenströme des Hydrauliksystems ist. Dabei weist der definierte Druckwert des Systemdrucks ein Druckniveau auf, von dem ausgehend das Durchfahren der Stromrampe einen detektierbaren Systemdruckeinbruch verursacht. Gleichzeitig wird der aktuelle Betätigungsstromwert i_EDS5 des der Hydraulikpumpe zugeordneten elektrohydraulischen Druckstellers dem ermittelten Fördervolumenstromwert zugeordnet und als Stützstelle der Pumpenkennlinie abgespeichert.

Um wiederum Hysterese-Effekte zu kompensieren, wird die Stromrampe auch in die dazu entgegengesetzte Richtung durchfahren, wobei hierfür ebenfalls zunächst der definierte Druckwert des Systemdrucks angefordert wird. Da jedoch von einem Betätigungsstromwert i_EDS gestartet wird, zu dem der von der Hydraulikpumpe zur Verfügung stehende Fördervolumenstrom nicht ausreichend ist, um den angeforderten Systemdruckwert zu erreichen, wird zunächst eine Unterversorgung des Hydrauliksystems bzw. ein Systemdruckeinbruch erkannt. Anschließend wird der Betätigungsstrom des der Hydraulikpumpe zugeordneten elektrohydraulischen Druckstellers sukzessive so verändert, dass der Fördervolumenstrom der Hydraulikpumpe ansteigt und der Systemdruckeinbruch zunehmend verringert wird. Zum Zeitpunkt, ab dem gerade kein Systemdruckeinbruch mehr ermittelt wird, wird ein Fördervolumenstrom Vp5 der Hydraulikpumpe bestimmt, der den aktuell eingestellten Systemleckagen entspricht.

Daran anschließend werden mittels jeweils die Mittelwerte aus Volumenstrom und Ventilbestromung für die bestimmte und durch den Volumenstrom Vp5 und den damit korrelierenden Betätigungsstrom i_EDS5 ermittelt und abgespeichert..

Zusätzlich sind mittels der weiteren Vorgehensweise auch durch die Fördervolumenströme Vp6 bis Vp8 und die damit korrelierenden Betätigungsströme i_EDS6 bis i_EDS8 charakterisierte Stützstellen des Bereichs II der Pumpenkennlinie dadurch ermittelbar, dass elektrohydraulische Drucksteller des Hydrauliksystems entsprechend bestromt werden, um den aus dem Hydrauliksystem abfließenden Leckageölvolumenstrom zu variieren und beispielsweise signifikant ansteigen zu lassen. Dabei wird jedoch eine unerwünschte Beeinflussung von hydraulischen Verbrauchern vermieden, die den zu bestromenden elektrohydraulischen Druckstellern zugeordnet sind. Beispielsweise wird eine Bestromung eines einer Kupplung zugeordneten elektrohydraulischen Druckstellers lediglich bis zu einer Obergrenze durchgeführt, unterhalb der eine Befüllung der Kupplung bzw. eine Auswirkung auf die Übertragungsfähigkeit der Kupplung unterbleibt.

Es liegt selbstverständlich im Ermessen des Fachmannes in Abhängigkeit des jeweils vorliegenden Anwendungsfalles jeweils mehr oder weniger als vier Stützstellen zum Einlernen der Pumpenkennlinie zu ermitteln.

Da Leckageölvolumenströme von Hydrauliksystemen von Getrieben prinzipbedingt eher gering ausfallen, sind über die weitere Vorgehensweise lediglich Stützstellen der Pumpenkennlinie für geringere Volumenströme Vp5 bis Vp8 der Hydraulikpumpe einlernbar.

Mittels einer der Bestimmung der Stützstellen nachgelagerten Plausibilisierungsfunktion besteht wiederum die Möglichkeit zu entscheiden, ob die für die Pumpenkennlinie ermittelten Werte plausibel sind oder ob das Risiko einer Fehldetektion besteht. In Abhängigkeit des Abfrageergebnisses wird wiederum ein entsprechender Hinweis ermittelt, ob ein erneuter Einlernversuch gestartet wird oder die Hydraulik auszutauschen ist.

Über die beiden vorbeschriebenen Vorgehensweisen ermittelten Stützstellen bzw. markanten Arbeitspunkte der Hydraulikpumpe ist entweder direkt eine Kennlinie ermittelbar oder eine Default-Kennlinie ohne eine am Komponentenprüfstand vorhandene Sensorik anpassbar, die für den weiteren Betrieb des Getriebes 3 jeweils heranziehbar sind, um das Getriebe 3 in gewünschtem Umfang betreiben zu können. Wird eine Default-Kennlinie mithilfe der Stützstellen angepasst, ist ein prinzipieller Verlauf der Pumpenkennlinie zwischen dem Bereich I und dem Bereich II, der gegebenenfalls über die vorbeschriebenen Vorgehensweisen nicht robust ermittelbar ist, in ausreichendem Umfang vorgebbar, was bei einer grundlegenden neuen Ermittlung der Pumpenkennlinie nicht ohne weiteres möglich ist.

Um mit der zweiten bzw. der weiteren Vorgehensweise auch Bereiche der Pumpenkennlinie oberhalb des Bereichs II einlernen zu können bzw. bestimmen zu können, wird bei einer Variante der weiteren Vorgehensweise zusätzlich zu der Leckage des Hydrauliksystems der Verbrauch der Getriebebetätigung bzw. der Aktuatorik des Getriebes 3 zunächst definiert eingestellt. Daran anschließend wird wiederum das Fördervolumen der Hydraulikpumpe solange reduziert, bis ein definierter Systemdruckeinbruch detektiert wird, wobei der dabei aktuell von der Hydraulikpumpe zur Verfügung gestellte Fördervolumenstrom gleich der Summe aus dem Leckageölvolumenstrom des Hydrauliksystems und des für die Getriebebetätigung verwendeten Fördervolumenstroms entspricht. Durch die definierte Einstellung der Getriebebetätigung fließen während der Aktuierungsphase des Getriebes 3 höhere Volumenströme aus dem Hydrauliksystem ab als dies alleine über die Leckagen des Hydrauliksystems der Fall ist, womit auch mit höheren Fördervolumenströmen korrespondierende Stützstellen der Pumpenkennlinie eingelernt werden können.

Während dem Abfahren der Stromrampe des Betätigungsdrucks i_EDS des der Hydraulikpumpe zugeordneten elektrohydraulischen Druckstellers in Richtung kleinerer Fördervolumenströme der Hydraulikpumpe besteht auch die Möglichkeit, bei jeder Stromstufe eine Befüllung einer Kupplung des Doppelkupplungssystems mit definiertem Druckdelta durchzuführen. Dieses definierte Druckdelta entspricht einem definierten Volumenstrom in Richtung des Kolbenraums der Kupplung. Solange der Systemdruck während der Kupplungsbefüllung nahezu unverändert bleibt, ist der Fördervolumenstrom der Hydraulikpumpe größer als der gesamte aus dem Hydrauliksystem abfließende Volumenstrom, d. h. der Fördervolumenstrom der Hydraulikpumpe ist größer ist als die Summe aus dem Leckageölvolumenstrom des Hydrauliksystems und dem während der Kupplungsbefüllung abfließendem Hydraulikfluidvolumenstrom. Bei Auftreten eines definierten Systemdruckeinbruchs wird erkannt, dass der aktuelle Stromwert i_EDS des der Hydraulikpumpe zugeordneten elektrohydraulischen Druckstellers mit dem abfließenden bzw. abgenommenen Fördervolumenstrom korrespondiert bzw. maximal um die Differenz zwischen den Stromstufen, je nach Durchfahrungsrichtung der Stromrampe, größer oder kleiner ist.

Um wiederum Hysterese-Effekte zu kompensieren, wird anschließend daran eine Stromrampe in Richtung höherer Volumenströme gefahren. Die einzulernende Stützstelle der Pumpenkennlinie ist dann erreicht, sobald kein definierter Systemdruckeinbruch mehr ermittelt wird.

Weitere Volumenstromstützstellen lassen sich in vorbeschriebenem Umfang einlernen, indem lediglich das Druckdelta zur Kupplungsbefüllung und somit auch der Volumenstrom in Richtung des Kolbenraums der Kupplung variiert wird.

Bei einer zusätzlichen Vorgehensweise zum Einlernen zumindest eines Bereichs der Pumpenkennlinie gemäß Fig. 2 wird ein beispielsweise als Schaltstangenzylinder ausgeführter hydraulischer Verbraucher des Hydrauliksystems ausgehend von einem definierten Betriebszustand bis zum Erreichen einer definierten Betriebszustandsänderung des hydraulischen Verbrauchers im Wesentlichen mit dem gesamten von der Hydraulikpumpe aktuell zur Verfügung gestellten Fördervolumenstrom beaufschlagt und zusätzlich der für die definierte Betriebszustandsänderung benötigte Zeitraum bestimmt.

Ein Schaltstangenkolben des Schaltstangenzylinders hat ein definiertes Volumen bzw. eine definierte Fläche. Durch Messen der Zeit, die während dem Verfahren der Schaltstange von einer definierten Lage, z. B. der Endlage eines Gangs des Doppelkupplungsgetriebes, in Richtung der Endlage des gegenüberliegenden Gangs verstreicht, ist der gesamte von der Hydraulikpumpe zur Verfügung gestellte Volumenstrom bestimmbar. Da das Getriebe 3 im Bereich des Schaltstangenzylinders mit einer entsprechenden Wegsensorik ausgestattet ist, sind beliebige Betriebszustandsänderungen des Schaltstangenzylinders, beispielsweise auch das Verfahren von Teilstrecken des gesamten Verfahrwegs einer Schaltstange für die Bestimmung des Fördervolumenstroms der Hydraulikpumpe analysierbar.

Um verschiedene Stützstellen der Pumpenkennlinie über die zusätzliche Vorgehensweise bestimmen zu können, wird der der Hydraulikpumpe zugeordnete elektrohydraulische Drucksteller mit unterschiedlich einzulernenden Stromstufen beaufschlagt und jeweils die Getriebeaktuatorik betätigt bzw. der hydraulische Verbraucher im vorbeschriebenen Umfang mit Hydraulikfluid beaufschlagt. Der anhand der Betriebszustandsänderung des hydraulischen Verbrauchers berechnete Volumenstrom der verstellbaren Hydraulikpumpe wird um den gesamten Leckageölvolumenstrom des Hydrauliksystems korrigiert, wobei der derart berechnete Volumenstrom dem tatsächlichen Fördervolumenstrom der verstellbaren Hydraulikpumpe entspricht. Alternativ hierzu besteht wiederum die Möglichkeit über die definierte Befüllung einer Kupplung des Doppelkupplungssystems mit definiertem Druckdelta den dabei von der Hydraulikpumpe zur Verfügung gestellten Fördervolumenstrom zu ermitteln, da das definierte Druckdelta einem in Richtung des Kolbenraums der Kupplung geführten definierten Volumenstrom entspricht.

Die aus regelungstechnischer Sicht jeweils gewählte Beblendung der Getriebe- und Kupplungsaktuatorik definiert den Bereich der Pumpenkennlinie, der über die zusätzliche Vorgehensweise einlernbar ist.

### Bezugszeichen

- 1: Fahrzeugantriebstrang
- 2: Antriebsmaschine
- 3: Getriebe
- 4: Abtrieb
- i_EDS: Betätigungsstrom
- i_EDS1 bis i_EDS8: diskreter Stromwert des Betätigungsstroms
- Vp: Fördervolumenstrom der verstellbaren Hydraulikpumpe
- Vp1 bis Vp8: diskreter Wert des Fördervolumenstroms

## Patentansprüche

1. Verfahren zum Betätigen eines Hydrauliksystems eines Getriebes (3) mit einer verstellbaren Hydraulikpumpe und einem auf einer Förderseite der Hydraulikpumpe angeordneten vorsteuerbaren Systemdruckventil, mittels dem ein Systemdruck eines Primärdruckkreises in Abhängigkeit des Fördervolumenstroms der verstellbaren Hydraulikpumpe und der Vorsteuerung einstellbar ist, **dadurch gekennzeichnet, dass** das Hydrauliksystem zur Ermittlung einer Pumpenkennlinie der Hydraulikpumpe zunächst in einen definierten Betriebszustandsbereich überführt wird, in dem der über das Systemdruckventil geführte und der von der Hydraulikpumpe am Systemdruckventil anliegende Fördervolumenstrom (Vp) größer oder kleiner als ein aus dem Hydrauliksystem abfließender und definiert eingestellter Hydraulikfluidvolumenstrom ist und das Systemdruckventil zur Einstellung eines definierten Druckniveaus des Systemdruckes entsprechend vorgesteuert wird, wobei ausgehend von diesem Betriebszustand des Hydrauliksystems jeweils der Fördervolumenstrom (Vp) reduziert oder vergrößert wird und dabei der Systemdruck überwacht wird, und wobei zum Zeitpunkt, zu dem eine Abweichung des jeweils aktuell vorliegenden Systemdrucks vom definierten Systemdruck größer oder gleich einer ersten Schwelle oder kleiner oder gleich einer zweiten Schwelle vorliegt, ein dem Hydraulikfluidvolumenstrom des Hydrauliksystems entsprechender Fördervolumenstrom (Vp) ermittelt wird.

2. Verfahren nach Anspruch 1, **dadurch gekennzeichnet, dass** das Hydrauliksystem nach Ermittlung des dem Hydraulikfluidvolumenstrom entsprechenden Fördervolumenstromes (Vp) wieder in den definierten Betriebszustandsbereich überführt wird, wobei der eingestellte Hydraulikfluidvolumenstrom gegenüber der vorhergehenden Bestimmung des Fördervolumenstroms (Vp) der Hydraulikpumpe verändert wird und daran anschließend der Fördervolumenstrom (Vp) der Hydraulikpumpe wiederum reduziert oder erhöht wird, und wobei zum Zeitpunkt, zu dem eine Abweichung des jeweils aktuell vorliegenden Systemdrucks vom definierten Systemdruck gleich einer Schwelle vorliegt, erneut ein dem Hydraulikfluidvolumenstrom des Hydrauliksystems entsprechender Fördervolumenstrom (Vp) der Hydraulikpumpe ermittelt wird.

3. Verfahren nach Anspruch 1 oder 2, **dadurch gekennzeichnet, dass** der Hydraulikfluidvolumenstrom des Hydrauliksystems stufenweise verändert wird.

4. Verfahren nach einem der Ansprüche 1 bis 3, **dadurch gekennzeichnet, dass** zur Darstellung des definierten Betriebszustandes des Hydrauliksystems der Fördervolumenstrom (Vp) der Hydraulikpumpe jeweils auf ein definiertes Niveau eingestellt wird.

5. Verfahren nach Anspruch 4, **dadurch gekennzeichnet, dass** das definierte Niveau des Fördervolumenstromes (Vp) der Hydraulikpumpe jeweils in Abhängigkeit des Hydraulikfluidvolumenstromes eingestellt wird.

6. Verfahren nach einem der Ansprüche 1 bis 5, **dadurch gekennzeichnet, dass** der Hydraulikfluidvolumenstrom in Abhängigkeit einer Betätigung eines oder mehrerer elektrohydraulischer Drucksteller des Hydrauliksystems variiert wird.

7. Verfahren nach einem der Ansprüche 1 bis 6, **dadurch gekennzeichnet, dass** der Systemdruck messtechnisch über eine im Bereich eines mit dem Systemdruck beaufschlagten Aktuators angeordnete Messeinrichtung bestimmt wird, wobei für das Druckniveau des im Bereich des Aktuators anzulegenden Betätigungsdruckes ein Wert vorgegeben wird, der größer ist als der aktuell eingestellte Systemdruck.

8. Verfahren nach einem der Ansprüche 1 bis 7, **dadurch gekennzeichnet, dass** der im Bereich einer Kupplung des Getriebes anzulegende Betätigungsdruck über einen der Kupplung zugeordneten elektrohydraulischen Drucksteller auf einen Wert größer als der Systemdruck eingestellt wird.

9. Verfahren nach einem der Ansprüche 1 bis 8, **dadurch gekennzeichnet, dass** der Hydraulikfluidvolumenstrom mittels eines das Hydrauliksystem abbildenden Models bestimmt wird.

10. Verfahren nach einem der Ansprüche 1 bis 9, **dadurch gekennzeichnet, dass** der Fördervolumenstrom (Vp) der Hydraulikpumpe in Abhängigkeit eines im Bereich eines elektrohydraulischen Druckstellers vorgebbaren Vorsteuerdruckes variiert wird, wobei der Vorsteuerdruck wiederum in Abhängigkeit eines am Drucksteller anlegbaren Betätigungsstromes steht.

11. Verfahren nach Anspruch 10, **dadurch gekennzeichnet, dass** eine die Abhängigkeit des Fördervolumenstroms (Vp) der Hydraulikpumpe vom im Bereich des der Hydraulikpumpe zugeordneten elektrohydraulischen Druckstellers anlegbaren Betätigungsstrom abbildende Kennlinie in Abhängigkeit des Hydraulikfluidvolumenstromes bestimmt wird.

12. Verfahren nach Anspruch 11, **dadurch gekennzeichnet, dass** die Kennlinie ausgehend von definierten Stützstellen erstellt wird, wobei die Stützstellen der Kennlinie mit Stromwerten (i_EDS5 bis i_EDS8) des Betätigungsstroms (i_EDS) des der Hydraulikpumpe zugeordneten elektrohydraulischen Druckstellers korrespondieren.

13. Verfahren nach Anspruch 10, **dadurch gekennzeichnet, dass** eine die Abhängigkeit des Fördervolumenstroms (Vp) der Hydraulikpumpe vom im Bereich des der Hydraulikpumpe zugeordneten elektrohydraulischen Druckstellers anlegbaren Betätigungsstrom abbildende Default-Kennlinie in Abhängigkeit des Hydraulikfluidvolumenstromes angepasst wird.

14. Verfahren nach Anspruch 13, **dadurch gekennzeichnet, dass** die Default-Kennlinie ausgehend von definierten Stützstellen erstellt wird, wobei die Stützstellen der Default-Kennlinie mit Stromwerten (i_EDS5 bis i_EDS8) des Betätigungsstroms (i_EDS) des der Hydraulikpumpe zugeordneten elektrohydraulischen Druckstellers korrespondieren.

15. Verfahren nach einem der Ansprüche 10 bis 14, **dadurch gekennzeichnet, dass** die definierten Stützstellen (i_EDS5 bis i_EDS8) der Kennlinie oder der Default-Kennlinie durch rampenförmiges Anheben und anschließendes rampenförmiges Reduzieren des Betätigungsstromes (i_EDS) des der Hydraulikpumpe zugeordneten elektrohydraulischen Druckstellers ermittelt werden, wobei der jeweils mit einer Stützstelle korrespondierende Stromwert (i_EDS5 bis i_EDS8) dem Mittelwert der Stromwerte entspricht, die während dem rampenförmigen Anheben und dem rampenförmigen Absenken des Betätigungsstromes jeweils für eine Stützstelle bestimmt werden.

16. Verfahren nach einem der Ansprüche 12 bis 15, **dadurch gekennzeichnet, dass** die jeweils für die Stützstellen ermittelten Stromwerte (i_EDS5 bis i_EDS8) mittels vordefinierter Werte plausibilisiert werden.

## Claims

1. Method for actuating a hydraulic system of a transmission (3) with an adjustable hydraulic pump and a system pressure valve which can be pilot-controlled, is arranged on a delivery side of the hydraulic pump, and by means of which a system pressure of a primary pressure circuit can be set in a manner which is dependent on the delivery volumetric flow of the adjustable hydraulic pump and the pilot control means, **characterized in that**, in order to determine a pump characteristic curve of the hydraulic pump, the hydraulic system is first of all transferred into a defined operating state range, in which the delivery volumetric flow (Vp) which is led via the system pressure valve and which prevails at the system pressure valve from the hydraulic pump is greater or less than a hydraulic fluid volumetric flow which flows out of the hydraulic system and is set in a defined manner, and the system pressure valve is pilot-controlled accordingly in order to set a defined pressure level of the system pressure, the delivery volumetric flow (Vp) being reduced or increased in each case in a manner which proceeds from the said operating state of the hydraulic system, and the system pressure being monitored in the process, and the delivery volumetric flow (Vp) which corresponds to the hydraulic fluid volumetric flow of the hydraulic system being determined at the time, at which there is a deviation of the respectively currently present system pressure from the defined system pressure which is greater than or equal to a first threshold or less than or equal to a second threshold.

2. Method according to Claim 1, **characterized in that**, after the determination of the delivery volumetric flow (Vp) which corresponds to the hydraulic fluid volumetric flow, the hydraulic system is transferred into the defined operating state range again, the hydraulic fluid volumetric flow which is set being changed with respect to the preceding determination of the delivery volumetric flow (Vp) of the hydraulic pump, and the delivery volumetric flow (Vp) of the hydraulic pump being once again reduced or increased subsequently, and a delivery volumetric flow (Vp) of the hydraulic pump which corresponds to the hydraulic fluid volumetric flow of the hydraulic system being determined again at the time, at which there is a deviation of the respective currently present system pressure from the defined system pressure which is equal to a threshold.

3. Method according to Claim 1 or 2, **characterized in that** the hydraulic fluid volumetric flow of the hydraulic system is changed in steps.

4. Method according to one of Claims 1 to 3, **characterized in that**, in order to enact the defined operating state of the hydraulic system, the delivery volumetric flow (Vp) of the hydraulic pump is set in each case to a defined level.

5. Method according to Claim 4, **characterized in that** the defined level of the delivery volumetric flow (Vp) of the hydraulic pump is set in each case in a manner which is dependent on the hydraulic fluid volumetric flow.

6. Method according to one of Claims 1 to 5, **characterized in that** the hydraulic fluid volumetric flow is varied in a manner which is dependent on an actuation of one or more electrohydraulic pressure regulators of the hydraulic system.

7. Method according to one of Claims 1 to 6, **characterized in that** the system pressure is determined in terms of measuring technology via a measuring device which is arranged in the region of an actuator which is loaded with the system pressure, the value which is greater than the currently set system pressure being predefined for the pressure level of the actuating pressure which is to be applied in the region of the actuator.

8. Method according to one of Claims 1 to 7, **characterized in that** the actuating pressure which is to be applied in the region of a clutch of the transmission is set to a value which is greater than the system pressure via an electrohydraulic pressure regulator which is assigned to the clutch.

9. Method according to one of Claims 1 to 8, **characterized in that** the hydraulic fluid volumetric flow is determined by means of a model which maps the hydraulic system.

10. Method according to one of Claims 1 to 9, **characterized in that** the delivery volumetric flow (Vp) of the hydraulic pump is varied in a manner which is dependent on a pilot control pressure which can be predefined in the region of an electrohydraulic pressure regulator, the pilot control pressure in turn being dependent on an actuating current which can be applied at the pressure regulator.

11. Method according to Claim 10, **characterized in that** a characteristic curve which maps the dependence of the delivery volumetric flow (Vp) of the hydraulic pump on the actuating current which can be applied in the region of the electrohydraulic pressure regulator which is assigned to the hydraulic pump is determined in a manner which is dependent on the hydraulic fluid volumetric flow.

12. Method according to Claim 11, **characterized in that** the characteristic curve is created in a manner which proceeds from defined grid points, the grid points of the characteristic curve corresponding with current values (i_EDS5 to i_EDS8) of the actuating current (i_EDS) of the electrohydraulic pressure regulator which is assigned to the hydraulic pump.

13. Method according to Claim 10, **characterized in that** a default characteristic curve which maps the dependence of the delivery volumetric flow (Vp) of the hydraulic pump on the actuating current which can be applied in the region of the electrohydraulic pressure regulator which is assigned to the hydraulic pump is adapted in a manner which is dependent on the hydraulic fluid volumetric flow.

14. Method according to Claim 13, **characterized in that** the default characteristic curve is created in a manner which proceeds from defined grid points, the grid points of the default characteristic curve corresponding with current values (i_EDS5 to i_EDS8) of the actuating current (i_EDS) of the electrohydraulic pressure regulator which is assigned to the hydraulic pump.

15. Method according to one of Claims 10 to 14, **characterized in that** the defined grid points (i_EDS5 to i_EDS8) of the characteristic curve or the default characteristic curve are determined by way of linear raising and subsequent linear reducing of the actuating current (i_EDS) of the electrohydraulic pressure regulator which is assigned to the hydraulic pump, the current value (i_EDS5 to i_EDS8) which corresponds in each case with a grid point corresponding to the mean value of the current values which are determined during the linear raising and the linear lowering of the actuating current in each case for one grid point.

16. Method according to one of Claims 12 to 15, **characterized in that** the plausibility of the current values (i_EDS5 to i_EDS8) which are determined in each case for the grid points is checked by means of predefined values.

## Revendications

1. Procédé pour actionner un système hydraulique d'un train d'engrenages (3) comprenant une pompe hydraulique réglable et une vanne de pression système pouvant recevoir une commande pilote qui est disposée du côté refoulement de la pompe hydraulique, au moyen de laquelle une pression système d'un circuit de pression primaire peut être réglée en fonction du débit volumique de refoulement de la pompe hydraulique réglable et de la commande pilote, **caractérisé en ce que** le système hydraulique est tout d'abord amené dans une plage d'états opérationnels définie en vue d'identifier une courbe caractéristique de pompe de la pompe hydraulique, dans laquelle le débit volumique de refoulement (Vp) acheminé au travers de la vanne de pression système et appliqué à la vanne de pression système par la pompe hydraulique est supérieur ou inférieur à un débit volumique de fluide hydraulique s'écoulant hors du système hydraulique et réglé de manière définie et la vanne de pression système reçoit une commande pilote correspondante en vue de régler un niveau de pression défini de la pression système, un débit volumique de refoulement (Vp) étant respectivement réduit ou augmenté à partir de cet état opérationnel du système hydraulique et la pression système étant alors surveillée, un débit volumique de refoulement (Vp) correspondant au débit volumique de fluide hydraulique du système hydraulique étant identifié à l'instant auquel il existe un écart entre la pression système respective actuellement présente et la pression système définie qui est égal ou supérieur à un premier seuil ou inférieur ou égal à un deuxième seuil.

2. Procédé selon la revendication 1, **caractérisé en ce que** le système hydraulique, après l'identification du débit volumique de refoulement (Vp) correspondant au débit volumique de fluide hydraulique, est de nouveau amené dans la plage d'états opérationnels définie, le débit volumique de fluide hydraulique réglé étant modifié par rapport à la détermination précédente du débit volumique de refoulement (Vp) de la pompe hydraulique et le débit volumique de refoulement (Vp) de la pompe hydraulique étant ensuite de nouveau réduit ou augmenté, puis un débit volumique de refoulement (Vp) de la pompe hydraulique correspondant au débit volumique de fluide hydraulique du système hydraulique étant de nouveau identifié à l'instant auquel il existe un écart entre la pression système respective actuellement présente et la pression système définie qui est égal à un seuil.

3. Procédé selon la revendication 1 ou 2, **caractérisé en ce que** le débit volumique de fluide hydraulique du système hydraulique est modifié par paliers.

4. Procédé selon l'une des revendications 1 à 3, **caractérisé en ce que** pour la représentation de l'état opérationnel défini du système hydraulique, le débit volumique de refoulement (Vp) de la pompe hydraulique est respectivement réglé à un niveau défini.

5. Procédé selon la revendication 4, **caractérisé en ce que** le niveau défini du débit volumique de refoulement (Vp) de la pompe hydraulique est respectivement réglé en fonction du débit volumique de fluide hydraulique.

6. Procédé selon l'une des revendications 1 à 5, **caractérisé en ce que** le débit volumique de fluide hydraulique est modulé en fonction d'un actionnement d'un ou plusieurs organes de réglage de pression électrohydrauliques du système hydraulique.

7. Procédé selon l'une des revendications 1 à 6, **caractérisé en ce que** la pression système est déterminée métrologiquement par le biais d'un dispositif de mesure disposé dans la zone d'un actionneur exposée à la pression système, une valeur supérieure à la pression système actuellement réglée étant prédéfinie pour le niveau de pression de la pression d'actionnement à appliquer dans la zone de l'actionneur.

8. Procédé selon l'une des revendications 1 à 7, **caractérisé en ce que** la pression d'actionnement à appliquer dans la zone d'un dispositif d'accouplement du train d'engrenages est réglée à une valeur supérieure à la pression système par le biais d'un organe de réglage de pression électrohydraulique associé au dispositif d'accouplement.

9. Procédé selon l'une des revendications 1 à 8, **caractérisé en ce que** le débit volumique de fluide hydraulique est déterminé au moyen d'un modèle qui représente le système hydraulique.

10. Procédé selon l'une des revendications 1 à 9, **caractérisé en ce que** le débit volumique de refoulement (Vp) de la pompe hydraulique est modulé en fonction d'une pression pilote qui peut être prédéfinie dans la zone d'un organe de réglage de pression électrohydraulique, la pression pilote étant à son tour dépendante d'un courant d'actionnement pouvant être appliqué au niveau de l'organe de réglage de pression.

11. Procédé selon la revendication 10, **caractérisé en ce qu'**une courbe caractéristique qui représente la dépendance du débit volumique de refoulement (Vp) de la pompe hydraulique au courant d'actionnement pouvant être appliqué dans la zone de l'organe de réglage de pression électrohydraulique associé à la pompe hydraulique est déterminée en fonction du débit volumique de fluide hydraulique.

12. Procédé selon la revendication 11, **caractérisé en ce que** la courbe caractéristique est créée à partir de points de référence définis, les points de référence de la courbe caractéristique correspondant à des valeurs du courant (i_EDS5 à i_EDS8) du courant d'actionnement (i_EDS) de l'organe de réglage de pression électrohydraulique associé à la pompe hydraulique.

13. Procédé selon la revendication 10, **caractérisé en ce qu'**une courbe caractéristique par défaut qui représente la dépendance du débit volumique de refoulement (Vp) de la pompe hydraulique au courant d'actionnement pouvant être appliqué dans la zone de l'organe de réglage de pression électrohydraulique associé à la pompe hydraulique est adaptée en fonction du débit volumique de fluide hydraulique.

14. Procédé selon la revendication 13, **caractérisé en ce que** la courbe caractéristique par défaut est créée à partir de points de référence définis, les points de référence de la courbe caractéristique par défaut correspondant à des valeurs du courant (i_EDS5 à i_EDS8) du courant d'actionnement (i_EDS) de l'organe de réglage de pression électrohydraulique associé à la pompe hydraulique.

15. Procédé selon l'une des revendications 10 à 14, **caractérisé en ce que** les points de référence définis (i_EDS5 à i_EDS8) de la courbe caractéristique ou de la courbe caractéristique par défaut sont identifiés par une élévation en forme de rampe suivie d'une diminution en forme de rampe du courant d'actionnement (i_EDS) de l'organe de réglage de pression électrohydraulique associé à la pompe hydraulique, la valeur du courant (i_EDS5 à i_EDS8) correspondant respectivement à un point de référence correspondant à la moyenne des valeurs de courant qui sont respectivement déterminées pour un point de référence pendant l'élévation en forme de rampe et la diminution en forme de rampe du courant d'actionnement.

16. Procédé selon l'une des revendications 12 à 15, **caractérisé en ce que** la plausibilité des valeurs du courant (i_EDS5 à i_EDS8) respectivement identifiées pour les points de référence est vérifiée au moyen de valeurs prédéfinies.
